(19) Europäisches Patentamt
European Patent Office
Office européen des brevets

(11) Publication number: 0 266 755 A2

# (12) EUROPEAN PATENT APPLICATION

(21) Application number: 87116238.4

(22) Date of filing: 04.11.87

(51) Int. Cl.4: C08J 5/04 , C08L 81/00 , B29B 15/12

(30) Priority: 05.11.86 US 927654

(43) Date of publication of application: 11.05.88 Bulletin 88/19

(84) Designated Contracting States: AT BE CH DE ES FR GB GR IT LI LU NL SE

(71) Applicant: PHILLIPS PETROLEUM COMPANY
5th and Keeler
Bartlesville Oklahoma 74004(US)

(72) Inventor: Beever, William Herbert
Rt. 2, Box 2670
Bartlesville Oklahoma 74003(US)
Inventor: Geibel, Jon Frederick
2600 Mountain Road
Bartlesville Oklahoma 74006(US)
Inventor: O'Connor, James Edward
5908 Martin Place
Bartlesville Oklahoma 74006(US)
Inventor: Lindstrom, Merlin Ray
919 SE King Circle
Bartlesville Oklahoma 74006(US)
Inventor: Mills, Stuart Duane
1000 SE King Circle
Bartlesville Oklahoma 74006(US)
Inventor: Register, David Francis
737 Brookhollow Lane
Bartlesville Oklahoma 74006(US)

(74) Representative: Geissler, Bernhard, Dr.
Patent- und Rechtsanwälte et al
Bardehle-Pagenberg-Dost-Altenburg-Frohwitter-Geissler & Partner
Postfach 86 06 20
D-8000 München 86(DE)

## (54) Polyarylene sulfide sulfone prepreg.

(57) A slurry process is used to produce a prepreg having a unidirectional fiber reinforcement embedded in a continuous matrix of high molecular weight highly melt stable polyarylene sulfide sulfone.

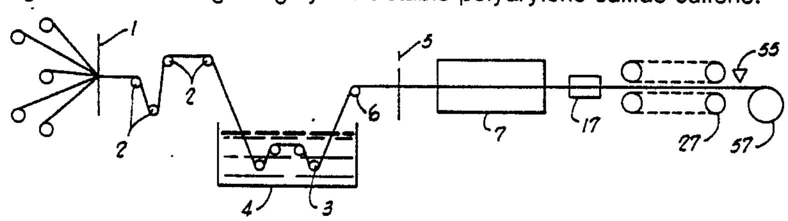


FIG. 1

EP 0 266 755 A2

# POLYARYLENE SULFIDE SULFONE PREPREG

## Background Of The Invention

### 1. Field Of The Invention

The present invention relates to processes for the manufacture of various shapes of fiber reinforced composite materials commonly referred to as a prepreg, and particularly to such processes and the resulting products having a thermoplastic matrix of a polyarylene sulfide sulfone material.

### 2. Description Of The Prior Art

In recent years, the assignee of the present invention has developed a process for preparing shaped objects such as fiber reinforced thermoplastic prepregs from a family of thermoplastics known as polyarylene sulfides. That basic process is disclosed in European Patent Application 125,472 published November 21, 1984.

That disclosure describes the preparation of fiber reinforced prepregs utilizing polyphenylene sulfide in accordance with a basic process wherein a continuous strand of fibers is pulled through an aqueous slurry of finely ground polyphenylene sulfide; then the strand is dried to remove the water carrier of the slurry. Subsequently the dried strand is pulled through an elongated heated die in which it is heated and compressed to melt the polyphenylene sulfide and form a composite material having at least one impregnated strand of reinforcing material in a matrix of polyphenylene sulfide. Also disclosed are structures formed from these composite prepreg materials.

Developments in the composite materials industry relating to the needs of the aerospace industry for high strength, high temperature materials have shown the need for materials which can be utilized in a high temperature environment, for example, for prolonged usage at temperatures up to 350°F.

The present application is directed to modifications and improvements upon the basic process disclosed in European Application 125,472 for use of that process in the production of composite prepreg materials utilizing a polyarylene sulfide sulfone material, preferably polyphenylene sulfide sulfone. The abbreviations PASS and PPSS are often used to refer to polyarylene sulfide sulfone and polyphenylene sulfide sulfone, respectively.

While it has been suggested, for example as seen in U. S. Patent No. 3,785,916 to Turton et al., that fiber reinforced composite materials could be produced with a PPSS matrix, the composite materials of Turton et al. are produced by very different methods.

It has been found that to successfully produce a composite material by a slurry process using PPSS requires a polymer material having very specific characteristics. Also, numerous previously unknown and unexpected modifications to the various processing parameters involved in the basic slurry prepreg process are required.

## Summary Of The Invention

Polyphenylene sulfide sulfone has very different physical characteristics from the polyphenylene sulfide disclosed in European Patent Application 125,472. The polyphenylene sulfide is a semi-crystalline material having a relatively distinct melting point. Polyphenylene sulfide sulfone, on the other hand, is an amorphous material which does not have a distinct melting point. Thus in a process dependent upon pultrusion through a heated die, many new problems are presented by the use of polyphenylene sulfide sulfone. Additionally, different problems of thermal stability are encountered when producing a prepreg material of polyphenylene sulfide sulfone, which is intended for subsequent repeated heating and cooling as it is manufactured into finished articles.

By means of the present invention, a suitable fiber reinforced prepreg material can be produced with a polyphenylene sulfide sulfone matrix, which material is suitable for subsequent laminating, forming and the like for production of finished articles.

To produce the prepreg material of the present invention, first a supply is provided of polyarylene sulfide sulfone resin, preferably polyphenylene sulfide sulfone, in the form of particles suspended in a slurry liquid to form a slurry. Also, a supply of fiber reinforcement in continuous form is provided.

The fiber reinforcement is impregnated with the particles by passing the fiber reinforcement through the slurry to form a resin impregnated reinforcement. The resin impregnated reinforcement is then heated sufficiently to substantially completely evaporate the slurry liquid to minimize resin buildup on a die subsequently used to form the prepreg.

Then the resin impregnated reinforcement is forced through a heated die to consolidate the resin and fiber reinforcement to form a fiber reinforced prepreg with a continuous thermoplastic matrix. The heated die softens the resin particles and then smears the softened particles together to form the continuous matrix.

Numerous objects, features and advantages of the present invention will be apparent to those skilled in the art upon a reading of the following disclosure when taken in conjunction with the accompanying drawings.

## Brief Description Of The Drawings

FIG. 1 is a schematic representation of the basic slurry process for production of composite prepreg material.

FIGS. 2a and 2b are side elevation and plan views of a first embodiment of the heated die.

FIGS. 3a and 3b are side elevation and plan views of an alternative embodiment of the heated die used for preparing a wide, thin prepreg strip.

FIGS. 4a and 4b are side elevation and plan views of another alternative heated die, also for preparing a wide, thin prepreg strip.

## Detailed Description Of The Preferred Embodiments

### General Description Of The Basic Slurry Process

Referring now to FIG. 1, a single strand or a multiplicity of strands are passed through roving guide 1 and around a first set of several adjustable redirect bars 2 which apply tension to the strands as the strands are pulled around the bars to thereby spread apart the individual fibers of each strand.

The strands then pass into a bath 4 where each strand is passed around a second set of several redirect bars 3 which cause further spreading of the fibers of the strands in the bath 4 containing aqueous polymer slurry so that the individual fibers or filaments have better contact with the polymer slurry. The strands become impregnated with resin particles in bath 4.

As the impregnated strands are pulled out of bath 4, they pass through a third set of redirect bars 6, similar to the first set 2. Only one bar 6 of the third set of redirect bars has been illustrated to simplify the drawing. The third set of redirect bars 6 acts to squeeze some of the slurry liquid from the impregnated strands.

The impregnated fiber strands are then pulled through a guide mechanism 5 for alignment for passage through a heated drying chamber or oven 7 which removes the slurry diluent leaving a dry strand. After passing through the drying chamber 7, the impregnated fiber strands are pulled through a heated die 17. A preheater (not shown), associated with heated die 17, may be used immediately adjacent the entrance of the heated die 17.

Referring now to FIGS. 2a and 2b, one form of die device for producing a tape or rod is shown. The die has a single cavity with a V-shaped mouth 37 which decreases in cross-sectional area to a cross-section 39--which can be rectangular, oval or circular--for the remainder of the length of the die. A typical die has an overall length of seven inches. The V-shaped mouth portion 37 which is clearly visible in FIGS. 2a and 2b, will have a length of about one inch. The remaining six inches of length of the cavity preferably has a slight taper in its vertical thickness viewed in FIG. 2a, over about five inches of length. Due to the scale of the drawing, this slight taper is not apparent in FIG. 2a. The last inch of the cavity adjacent the end designated 39 preferably has a constant cross section. This die is equipped with thermocouples such as 29, 31, 33 and 35 for measuring the temperature throughout the length of the die. The V or funnel shape of the mouth of the die allows for easier entrance and gradual compacting of the strand as it passes into the heated die.

Controlled means for providing heat to the die is provided by electrical strip heaters which are not shown.

Referring to FIGS. 3a and 3b, a similar die for producing a thin sheet is shown. In this die, the mouth 41 is again of greater area of cross section than the outlet 43. The cross-sectional area decreases to become a wide flat rectangle. Again, as discussed above regarding FIG. 2a, there preferably is a slight taper of the vertical thickness along most of the length of the cavity with about the last inch of the cavity having a constant cross section. This die is also equipped with thermocouples 47, 49, 51 and 53. The larger cross-sectional area of the mouth of the die provides for easier entrance and gradual compacting of the polymer, as previously discussed.

Referring to FIGS. 4a and 4b, a die having continuous straight walls and a constant taper over most of its length has been provided by placing shims 61 in the entrance edge of the die at bore holes 67 and 67′ to prop the opening at the thickness of the shim. The die is also bolted through bore holes 69 and 69′ to allow easy access to the die cavity for clean-out. Thermocouples can be inserted into the die as shown at 62, 63, 64 and 65 to allow temperature measurement to determine gradient over the length of the die which can be equipped with electrical stripheaters which are not shown.

The die of FIG. 4a has an upper part 71 and a lower part 73. The lower part 73 has a wide, shallow cavity cut in the upper surface thereof. The cavity has a bottom defined by surface 75 shown in dashed lines in FIG. 4a, and has lateral sides indicated by dashed lines 77 and 79 in FIG. 4b.

A relatively short first portion 81 of the length of the cavity has the bottom surface 75 curved or flared as seen in FIG. 4a to provide a wider opening to the cavity. A major remaining portion 83 of the length of the cavity has the bottom surface 75 substantially straight.

Referring again to FIG. 1, the strand or strands, now a formed composite of fiber strand impregnated and surrounded by a polymer matrix, are pulled out of the die 17 by a gripping/pulling mechanism 27 of the type which is commonly used in pultrusion processes. After passing through the pulling mechanism, the formed composite then can be cut to any desired length using cutting device 55. These cut lengths, particularly of sheet material, are known as prepregs and can be stacked and compression-molded together to form multi-layer laminates of great structural strength.

Alternatively, a rotating mandrel 57, preferably heated, can be used as the pulling device upon which the heated, formed composite is wound. Such mandrels are known in the art as shown in U. S. Patents 4,010,054 and 4,081,302. The wound composites can then be shipped with reheating and unwinding at the shipping destination or heated sufficiently for permanently bonding to form hollow shaped objects.

## Description Of The Preferred Polymer Resins

The preferred polymer for use with the present invention is a polyarylene sulfide sulfone material, preferably polyphenylene sulfide sulfone containing repeating (phenylene-sulfide-phenylene-sulfone-) units having the following structural formula:

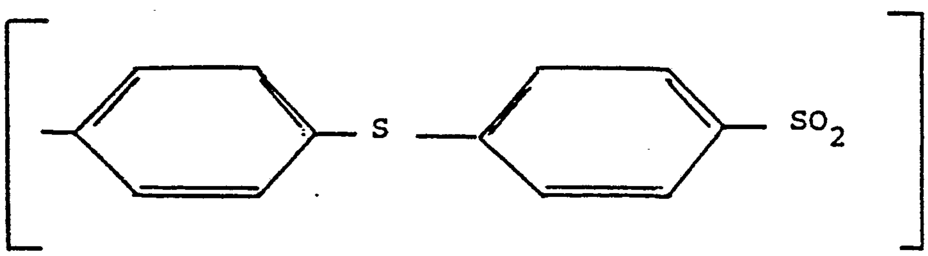

Furthermore, for suitability for forming the prepreg material by a slurry process, and for suitability for subsequent construction of reinforced thermoplastic structures from multiple layers of the prepreg material, certain characteristics of the PPSS resin must be controlled.

First, it is preferred that the resin be a relatively high molecular weight resin. Second, it is preferred that the resin be a melt stable resin.

High molecular weight PPSS resins are characterized as having an inherent viscosity greater than 0.40 dl/g, and preferably in a range from about 0.43 to about 0.47, at 30°C. in concentrated N-methyl-2-pyrrolidone at a resin concentration of 0.5 g/100ml as measured by a modified ASTM D 2857. Later references in this specification to ASTM D 2857 are intended to refer to the test conditions just described.

The high molecular weight PPSS resins are characterized further as having a melt flow rate of less than about 24 g/10 min., and preferably a melt flow rate of less than about 15 g/10 min. Melt flow rate is measured by ASTM D 1238 that is modified by increasing the operating temperature to a point sufficient to soften the PPSS resins. For this most preferred PPSS resin, the rest condition is 343/5.0, indicating a test temperature of 343°C. and the use of a test weight of 5.0 Kg. Melt flow rate is expressed in grams per ten minutes, abbreviated "g/10 min.".

In the process and composition that is described in this specification, the high molecular weight PPSS is even further characterized as being melt stable or highly melt stable. Melt stable resins are characterized as maintaining a thermoplastic behavior with high retention of physical properties after at least one melt processing procedure such as melt extrusion and the like. Even more preferred are highly melt stable resins that can be melt processed in two or more stepwise operations with retention of physical properties. For example, such stepwise operations could include extrusion pelletizing in a first step, injection molding of the pellets in a second step to form a sheet, and melt compacting of the sheet in a reinforced laminate in a third step. The post-forming advantage of molded articles containing at least one thermoplastic resin over articles containing a thermoset resin is a desirable characteristic to maintain during at least one melt process multi-step operation.

It will be understood that when terms such as "melt processed" are used in reference to an amorphous material like PPSS which does not have a distinct melting point, it is not required that the material actually "melt" in the technical sense of being heated above a distinct melting point. It is only required that the amorphous PPSS be heated to a temperature at which it is sufficiently softened that the desired shape transforming process step can be performed on it. This can generally be referred to as a softening temperature of the amorphous material.

The melt stability variation of PPSS resins is demonstrated by observation of the fresh extrudate that is formed during measurement of the melt flow rate by ASTM D 1238. The preferred PPSS resins form a void-free flexible, continuous, smooth-surfaced cylindrical extrudate having a diameter only slightly in excess of that of the orifice die. In contrast, an unstable PPSS resin forms an extrudate that has many voids, a rough surface, and is inflexible having a diameter several times that of the orifice die. Gas evolution during the heating/cooling cycle of melting extrusion can account for a portion of the observed behavior of the unstable PPSS resins.

Melt stable PPSS resins of the preferred characteristics of melt flow rate and inherent viscosity can be characterized further by a detectable zinc concentration. Generally, the zinc concentration (expressed on an elemental zinc basis) effective to melt stabilize the resin is approximately 700 parts per million by weight. The zinc can be added to the resin by an aqueous solution treatment as is discussed below.

The preferred PPSS resins are characterized as having a glass transition temperature ($T_g$) in the range of about 200 to about 240°C., and preferably from about 210 to about 220°C. Although the PPSS resins do not have a distinct melting temperature since they are amorphous materials, they do sufficiently soften so that they can be pulled through the heated die 17 when heated to a temperature in the range of about 325 to about 355°C.

The PPSS resin is produced in particulate form by various known polymerization reactions. Melt flow stabilization of the preferred PPSS resin is improved by incorporation of a zinc salt at a low level, e.g., about 0.05 to about 12 percent by weight of the zinc compound. The zinc salt is preferably incorporated by washing particulate PPSS with an aqueous solution of a zinc carboxylate, e.g., zinc acetate. The zinc salt can also be incorporated into the PPSS by addition of the salt to the polymerization reaction mixture in which the PPSS is prepared after the polymerization is essentially complete.

The approximate physical properties of the preferred PPSS resin which has been stabilized with a zinc salt are shown on the following Table I. Some properties of polyphenylene sulfide are shown in the last column for comparative purposes.

TABLE I

PPSS Neat Resin Properties

| Property | PPSS Batch Number No. 1 | No. 2 | No. 3 | No. 4 | PPSS |
|---|---|---|---|---|---|
| Flow Rate, g/10 min. (ASTM D 1238, 343/5.0) | 9 | 45 | 122 | 185 | - |
| I.V., dl/g (ASTM D 2857) | 0.45 | 0.36 | 0.32 | 0.28 | - |
| Flex. Mod., $10^5$ psi (ASTM D 790) | 4.7 | 4.6 | 4.9 | 4.6 | 4.4 (5.8)[a] |
| Flex. Str., $10^3$ psi (ASTM D 790) | 25.7 | 22.3 | 22.4 | 12.9 | 14.1 (23.4) |
| Tensile Str., $10^3$ psi (ASTM D 638) | | | | | |
| yield | 14.5 | 14.0 | - | - | - |
| break | 9.8 | 12.0 | 13.0 | 9.0 | 5.7 (13.9) |
| Elongation, % (ASTM D 638) | | | | | |
| yield | 4.2 | 4.2 | - | - | - |
| break | 7.3 | 5.4 | 3.0 | 2.0 | - (3.9) |
| Izod, ft-lb/in (ASTM (D 256) | | | | | |
| Notched | 0.8 | 0.7 | 0.6 | - | 0.4 (0.4) |
| Unnotched | 25.2 | 18.0 | 11.4 | 4.0 | 17 (7.6) |
| Heat distortion, °C (ASTM D 648) (264 psi) | 198 | - | 178 | - | (105) |

(a) Annealed 2 hrs. at 200°C.

As mentioned above, the PPSS resin preferably has an inherent viscosity greater than about 0.40 dl/g. Some of the reasons for this are apparent from the data of Table I in which Batch Numbers 1 through 4 represent resin with progressively decreasing visco sities from 0.45 to 0.28 dl/g. Some properties drop off drastically between Batch No. 2 (IV = 0.36) and Batch No. 3 (IV = 0.32); e.g., the unnotched Izod test drops from 18.0 ft lb/in to 11.4 ft lb/in.

## The Fiber Reinforcement

The fiber reinforcement is provided preferably in a continuous form such as mono-filament, or an assembly of filaments or fibers to yield a strand or yarn or roving and for convenience is provided on a creel as a multiple source. The continuous fiber reinforcement is characterized as having filaments aligned in a single direction, often being characterized as unidirectional fiber reinforcement. The strands of fiber reinforcement are composed of filaments of glass, carbon, aramid (aromatic polyamide) or metal or mixtures thereof. Also used are filaments from inorganic materials such as beryllia, magnesia, alumina, silica, zirconia, thoria, boron nitride, boron carbide, silicon carbide and aluminosilicate and mixtures thereof. The preferred fiber reinforcement is composed of glass, carbon, aramid or metal or mixtures thereof.

Preparation Of The Slurry

The aqueous PPSS slurry contains sufficient liquid to obtain an efficient workable loading of the strands of fiber reinforcement to produce a resin impregnated strand having from about 25 to about 50 weight percent PPSS content, and accordingly having about 75 to about 50 weight percent fiber content.

When using carbon fibers, it has been found preferable that the resin impregnated strand contain from about 30 to about 50 weight percent of PPSS, and accordingly about 70 to about 50 weight percent carbon fiber content. Optimally, the preferred resin impregnated carbon fiber strand will contain about 40 weight percent PPSS and about 60 weight percent carbon fiber.

When utilizing glass fibers, it is preferred that the resin impregnated strand contain from about 25 to about 50 percent PPSS, and accordingly from about 75 to about 50 percent glass fiber. Optimally, it is preferred that the resin impregnated glass strands contain about 30 weight percent PPSS and about 70 weight percent glass fiber.

These preferred ranges provide sufficient polymer to impregnate and provide a matrix within which the strand is contained and yet do not provide so much polymer that passage of the impregnated strands through the heated die 17 is impeded sufficiently that breakage of the strands is caused.

Also, it is noted that the process of the present invention can be utilized to make injection molding feedstocks by pultruding a shape such as a 1/8-inch diameter rod in a manner like that described herein, and subsequent cutting of the pultruded rod into relatively short lengths, for example, 1/2-inch long. For such injection molding feedstocks, the pultruded prepreg rod would preferably contain about 35 to about 45 weight percent fiber for either carbon or glass fibers, and in such usage, the fiber percentage may even go down to as low as about 25 weight percent. For such injection molding feedstocks, it may be necessary to use a somewhat lower molecular weight resin than that which is preferred for prepreg which is intended to be made into laminated structures; the resins identified as Batch Nos. 2, 3 and 4 in Table I above would all be suitable for use as injection molding feedstocks.

An important step in the preparation of the slurry is the provision of the preferred PPSS resin described above in a uniform and appropriate particle size. In order that the particulate PPSS material can be received in and fill the spaces between the fibers making up the reinforcing strand, it is preferred that the particulate PPSS material have an average particle size on the order of the diameter of the reinforcing fibers. Preferably, the preferred particulate PPSS resins are provided with an average particle size in the range of about fifteen to twenty microns. This is suitable for use with reinforcing strands formed of carbon or glass in which the fibers have a diameter in the range of seven to twelve microns. The measurement of average particle size can be accomplished with a Model 715 laser granulometer manufactured by Cilas Compagnie Industrielle Des Lasers, available through Marco-Scientific Incorporated of Sunnyvale, California.

The smallest average particle size resin causes the greatest resin penetration of the fiber reinforcement strands at a given strand tension during the impregnation step in the slurry bath and yields a prepreg that is well wet-out. The degree of particle penetration of the fiber reinforcement can be varied by matching of strand tension to spread the strands over the redirect bars 3, and line speed to alter duration of the strand in the slurry, to the average particle size. With a given particle size distribution and line speed, an increased strand tension pulls the strands tighter against the redirect bars 3 thus spreading apart the fibers of the strand and reducing the fiber reinforcement content of the prepreg product.

The preferred size of particles can be obtained utilizing various grinding techniques. Due to the very tough viscous nature of the preferred PPSS resins, the grinding of the particulate material received from the polymerization reaction to the smaller particle size necessary for the slurry is somewhat more difficult than is the grinding of, for example, polyphenylene sulfide such as that described in European Patent Application 125,472.

Sufficient particle size reduction of the preferred PPSS polymer can be obtained in laboratory quantities by a multi-step grinding procedure. First, the coarse polymer is ground with a hammer mill to a median particle size of 100 to 130 microns. Second and third stages are sequential grindings of the PPSS with a Trost T-15 air mill. The air mill feed rate must be carefully monitored to insure proper grinding and particle size classification. A detailed description of the theory and operation of the Trost T-15 air mill can be found in "Basic Fluid Energy Pulverizing Principles and Manual on the Operation of Trost Jet Mills" published by Garlock, Inc., of Newtown, Pennsylvania. Alternatively, larger quantities can be produced with a Trost T-30 air mill in a two-pass air milling procedure without any hammer milling.

Resin particle penetration into the fiber reinforcement strands can be increased by incorporation of a wetting agent into the resin slurry when an aqueous slurry is employed. Effective wetting agents are selected from among the group consisting of polyoxyethylated vegetable oils, ethoxylated alkylphenols, ethoxylated aliphatic alcohols, alkylaryl polyether alcohols and polyoxyalkylene oxide block copolymers

including mixtures thereof. Preferred materials are alkylphenoxypoly(ethyleneoxy)ethanols such as octylphenoxypoly(ethyleneoxy)ethanol and polyoxyethylated derivatives of castor oil. Examples of the preferred materials are Triton X-100 (Rohm and Haas Company), a scintillation surfactant identified as S-507 (Fisher Scientific Co.) and a surfactant EL-620 (GAF Corp.). The amount of wetting agent present in the slurry can be from about 1 to about 20 weight percent of the amount of PPSS resin present, preferably in the range of from 5 to 15 weight percent, and most preferably in the range of 5 to 10 weight percent of the amount of PPSS resin present. The presence of the wetting agent should cause no adverse effect on the properties of the prepreg or laminates prepared therefrom.

## The Drying Step

The resin impregnated strand is dried in the heated drying chamber 7.

With the slurry process disclosed in European Patent Application 125,472 utilizing polyphenylene sulfide as the polymer matrix, it was not critical that the material be completely dried in the drying chamber 7. It was possible when using polyphenylene sulfide that an observable amount of moisture could remain on the strand so that it steamed upon contact with the heated die 17, and yet the process would still function satisfactorily.

When using PPSS as the polymer matrix, however, it is much more important that the material be thoroughly dried before reaching the heated die 17. If observable dampness of the PPSS impregnated strand is allowed upon contact of the strand with the heated die 17, a heavy viscous buildup occurs at the die causing the impregnated strand to be pulled apart.

Accordingly, with the process of the present invention utilizing a PPSS polymer matrix, it is important that the strand be substantially completely dried in the heated drying chamber 7 such that there is no observable dampness or steaming upon contact of the strand with the heated die 17. At the same time, it is important that the PPSS impregnated strand not be heated to the extent that any substantial softening of the PPSS resin occurs in the drying chamber 7.

The drying of the strand is dependent both upon the heat applied in heated drying chamber 7 and the condition of the strand upon leaving the slurry bath. Inclusion of excessive diluent in the slurry can result in too little resin on the fiber reinforcement or can cause diluent to be carried into the die which is undesirable. The impregnated strand can be tested for proper content of resin by sampling the resin-impregnated strand at the drying step with the determination of the weight of resin, the weight of fiber reinforcement and the water content, preferably nil, of the particular sample. The amount of dilution of the slurry can then be adjusted according to the results of the particular dried sample. The slurry is maintained at the appropriate resin concentration by the introduction therein, periodically, preferably continuously, of an additional slurry comprising resin, wetting agent and slurry liquid.

The resin impregnated strand is preferably dried in the drying chamber to the point where all water, or other slurry liquid, from the slurry is completely evaporated from the resin impregnated strand, but no substantial additional heating of the resin has been accomplished thus avoiding any substantial sof tening of the resin. This results in a resin impregnated strand exiting the drying chamber 7 which has the resin particles distributed throughout the voids between fibers of the fiber strand. These particles are dry, non-softened particles which maintain their individual character, and the physical appearance is that of a dry powder dispersed throughout the voids between fibers of the fiber strand.

If excessive heating occurs in the drying chamber 7, the resin particles will begin to stick together in the drying chamber 7. This has a detrimental effect upon the quality of the prepreg subsequently formed in the heated die 17.

When the process is properly functioning, the resin particles will not be heated to a substantially softened state until they are within the confines of the heated die 17 where they will be softened and simultaneously smeared together with the die 17 to form the continuous thermoplastic matrix surrounding the fiber reinforcement.

If, however, there is excessive heating of the resin in the drying chamber 7 so that the resin particles begin to stick together before entering the heated die 17, then the wide, thin prepreg tape will tend to split as it is pulled through the heated die 17.

This is a much more serious problem when utilizing PPSS as compared to a process utilizing polyphenylene sulfide. This is believed to be because the amorphous PPSS is much more viscous and does not flow well when heated. Additionally, the amorphous PPSS also cures significantly faster when subjected to heat than does the polyphenylene sulfide as used in previous processes.

Die Temperature And Conditions

The temperature to which the PPSS is heated in heated die 17 is very important. The temperature must be high enough to sufficiently soften the PPSS so that the particulate PPSS can be consolidated into a continuous matrix within the die 17. At the same time, however, if the polymer is heated to too high a temperature, the PPSS material begins to cure thus greatly reducing its thermal stability and its suitability for use as a prepreg material which is expected to undergo one or more subsequent heating and cooling processes for production of the final reinforced thermoplastic articles.

The resin impregnated reinforcing strand is maintained at a temperature in heated die 17 that is sufficient to maintain at least a portion of the PPSS in a softened state as it exits the die 17, preferably within the range of about 325 to about 355°C. Most preferably, when using the preferred high molecular weight PPSS material, the temperature at the exit of heated die 17 is in the range of about 345 to about 355° C. The heating of the heated die 17 is controlled by an electrical strip heater (not shown) as monitored by the thermocouples such as those designated as 62, 63, 64 and 65 in FIGS. 4a and 4b. Many other suitable means of controlled heating can be utilized.

The die temperatures used for forming the PPSS prepreg (325-355°C.) are generally higher than those previously utilized in making similarly shaped polyphenylene sulfide prepregs (300-325°C.).

Additionally, it has been found to be very important when utilizing PPSS material that the heated die 17 be kept very clean to prevent buildup of PPSS on the faces of the die.

As compared to, for example, polyphenylene sulfide material like that disclosed in European Patent Application 125,472, the PPSS material utilized with the present invention is very much more difficult to utilize in the slurry bath pultrusion process. This is believed to be due to the fact that PPSS is an amorphous material which does not have a distinct melting point. Accordingly, even when heated to a softened state, the PPSS material is much more viscous than is polyphenylene sulfide which has been heated to above its melting temperature, thus more difficulty is encountered in pulling the PPSS material through the orifice of the heated die 17. Additionally, it is believed that the PPSS material tends to stick to the heated die 17 because the sulfone group is polar and itself tends to stick to the die.

Accordingly, in the process of the present invention, it is important that the heated die 17 be kept clean. In the tests which have been run to date, this has been accomplished by opening the heated die 17 approximately every one-half to two hours and polishing the operating surfaces thereof with a brush to remove all polymer material which may be adhered to the die surfaces.

EXAMPLE NO. 1

Part A - PPSS Preparation

This example demonstrates the preparation of the preferred PPSS polymer in Part A, and demonstrates a suitable zinc acetate treatment to improve the melt stability of the PPSS in Part B.

A two-gallon autoclave equipped with temperature and pressure measuring means, stirring means, external heating means and internal cooling coils was charged with 1,160.2 g (4.05 g-mole) bis (4-chlorophenyl) sulfone, 424 g (4.00 g-mole) sodium carbonate, 328 g (4.00 g-mole) sodium acetate, 224.2 g (4.00 g-mole) sodium hydrosulfide, 1,587.5 g (16.00 g-mole) N-methyl-2-pyrrolidone (NMP), and 108 g (6.00 g-mole) deionized water. The sodium hydrosulfide was charged as an aqueous solution of 58.977 wt. % NaSH. The mixture was heated from 26°C. to 199°C. over a period of about one hour while stirring at 600 rpm and maintained at 200°C. for three hours. A mixture of 1200 mL NMP and 200 mL deionized water was then pumped into the reactor over a period of about 2 hours (typically requires only about 15 minutes) during which the pressure increased from 255 psig to 300 psig while the temperature decreased to 180°C. The 2-hour pumping period was caused by mechanical difficulties with the pump. Stirring at 600 rpm was maintained throughout this period and until about 150°C. was reached. Subsequent slow cooling overnight to ambient temperature was done in the absence of stirring. The reaction mixture was removed from the reactor as a solid particulate material comprising PPSS and imbibed liquids. The solid material was washed with hot (about 90°C., about 4L) deionized water, filtered, and rinsed once on the filter. This process was repeated twice more and then a final wash with cold deionized water concluded the procedure to remove water soluble impurities. The recovered PPSS had a flow rate of 3.97g/10 minutes determined at 343°C. using a 5 kg weight and 0.0825 ± 0.002 inch diameter/0.315 ± 0.001 inch long orifice according to the procedures of ASTM D1238, Procedure B.

Part B - Zinc Acetate Treatment

A one-liter autoclave was charged with 40 g of the PPSS polymer prepared and recovered as described above, 400 g deionized water and 4.0 g zinc acetate. The autoclave was equipped with stirring means, heating/cooling means and means for measuring temperature and pressure. The PPSS/aqueous zinc acetate mixture was heated to 185°C. with stirring and held for one hour at that temperature with continued stirring. The mixture was then cooled to ambient temperature and the recovered polymer washed once in hot water (about 90°C., about 400 mL) with stirring. The recovered polymer was then dried under vacuum at 160°C.

A control run was carried out by treating 40 g of the same PPSS employed above in the same manner except that no zinc acetate was added to the 400 g of water used in the treatment.

Melt stability of the zinc acetate treated PPSS and the control run PPSS was determined by measuring weights of extruded PPSS obtained at 1-minute intervals from an extrusion plastometer at 343°C. under a 5 kg weight with the same orifice used to determine melt flow.

In these tests, one minute extrudate samples were taken after 6 minutes of holding the polymer in the extrusion plastometer had elapsed and continued through the eleventh or twelfth minute. The one minute extrudate samples were weighed and the results obtained are shown in TABLE II below.

TABLE II

Extruded PPSS wt. in One Minute, g

| After Minutes @ 343°C. | Zinc Acetate Treated | Control Run |
|---|---|---|
| 6 | 0.91 | 0.75 |
| 7 | 0.91 | 0.72 |
| 8 | 0.87 | 0.66 |
| 9 | 0.83 | 0.63 |
| 10 | 0.82 | 0.59 |
| 11 | 0.82 a) | 0.53 b) |
| 12 | ----c) | 0.47 |

a) Represents a 90% retention of the flow value taken at 6 minutes.

b) Represents a 71% retention of the flow value taken at 6 minutes.

c) No measurement made.

It can be observed that even at the 6 minute hold mark in the above tests, the control polymer already had a reduced flow weight compared with the zinc acetate treated polymer.

The above results demonstrate that zinc acetate treatment significantly improved the melt stability of PPSS as measured by extrudate weights of the melt held at 343°C. for a period of time.

EXAMPLE NO. 2

Preparation Of PPSS Prepreg

This example demonstrates the feasibility of impregnating continuous carbon fiber reinforcement with a PPSS resin powder suspended in an aqueous slurry and pultruding the impregnated reinforcement through a heated die to form a uni-directionally reinforced article with a continuous thermoplastic matrix.

The PPSS polymer used in this example was not the preferred high molecular weight highly melt stable polymer. Instead, it was a relatively low molecular weight polymer having an inherent viscosity of about 0.3 dl/g. Also, it did not have any zinc content.

A die like that shown in FIGS. 4a and 4b was utilized to form a prepreg tape of approximately three inches width. The shallow cavity had a depth of 0.006 inch. The lengths 81 and 83 were one inch and six inches, respectively, for a total die length of seven inches. Shims 61 have a thickness of about 0.094 inch.

Four gallons of aqueous slurry of air milled PPSS material having an average particle diameter of approximately 15 to 20 microns was prepared containing approximately 6.9 weight percent PPSS. Initially, thirteen strands of continuous carbon fiber reinforcement (Hercules AS4-12K, unsized, Hercules, Inc., Aerospace Bacchus Works, Magna, Utah) were passed through the aqueous PPSS slurry at an initial line speed of 22 inches per minute. Initially, the slurry bath was set up to receive additional PPSS slurry (containing 15 weight percent PPSS material) from a master batch of slurry at a rate of 25 ml/min. The oven 7 was initially maintained at a temperature of 400°C. The heated die 17 was initially set so that the die temperature at thermocouple 65 (see FIG. 4b) adjacent the exit of the die was 325°C.

A number of adjustments were made to the process during the production of the PPSS prepreg material. Starting at time zero, the timing of the adjustments is indicated in hours and minutes subsequent to time zero.

Throughout the process, linespeed, tension, and slurry concentration adjustments were made to adjust resin pickup to give a prepreg tape of the desired resin percentage.

At time 0:25, one additional strand of fiber reinforcement was tied in for a total of fourteen strands.

At time 0:56, the oven temperature was decreased to 360°C. because of excessive softening of the PPSS. At time 1:13, the oven temperature was again reduced to 340°C, again because of excessive softening of the PPSS.

At time 1:27, one gallon of the slurry was drained from bath 4 and replaced with one gallon of addition slurry containing 15 weight percent PPSS polymer. At that same time, the temperature of oven 7 was again reduced to 320°C.

At time 2:12, the temperature at the exit of heated die 17 was increased to 340°C. to try to smooth out the surface appearance of the prepreg material; at 325°C. the surface looked good but the tape was cupped. The die temperature was measured at the exit but was approximately uniform through the die 17.

At time 2:18, with the die temperature running between 340-345°C., the prepreg looked appreciably better and was much flatter.

At time 4:00, an additional fifteen milliliters of surfactant was added to bath 4.

The final product was a prepreg tape about 0.008 inches thick and about three inches wide. This continuous prepreg tape was cut to about ten-inch lengths which could subsequently be laminated.

The percentage of PPSS particulate material in the slurry was continously monitored as shown in the following Table III.

TABLE III

WEIGHT PERCENT PPSS IN SLURRY

| Time | Percent PPSS |
|---|---|
| 0:00 | 6.9 |
| 0:47 | 7.4 |
| 1:44 | 9.4 |
| 2:44 | 10.0 |
| 6:11 | 10.9 |

Also throughout the test, samples were periodically taken of the resulting prepreg material to determine the percentage of carbon fiber material in the resulting prepreg. The results of these tests are shown in the following Table IV. The data was based upon ten-inch samples of the prepreg material.

TABLE IV

Weight Percentage Fiber In PPSS Prepreg (3")

| Time | Wt. of 10 in. | Wt. of 10" Fiber | Line Speed | No. Strands | % Fiber |
|---|---|---|---|---|---|
| 0:05 | 4.5848 | 2.9211 | 22 | 13 | 63.7 |
| 0:18 | 4.3073 | 3.1458 | 22 | 13 | 67.8 |
| 0:47 | 4.3428 | 3.1458 | 18 | 14 | 72.4 |
| 1:17 | 3.9489 | 3.1458 | 12 | 14 | 79.7 |
| 1:54 | 4.8741 | 3.1458 | 12 | 14 | 64.5 |
| 3:03 | 4.4100 | 3.1458 | 12 | 14 | 71.3 |
| 3:48 | 4.8628 | 3.1458 | 12 | 14 | 64.7 |
| 4:57 | 4.9012 | 3.1458 | 6 1/2 | 14 | 64.2 |
| 6:11 | 5.4582 | 3.1458 | 6 1/2 | 14 | 57.6 |

During this test some difficulty was encountered with pickup of the particulate material by the reinforcing strand as it passed through the slurry bath. This is believed to probably be due to the PPSS polymer's polarity. In order to obtain the desired fiber content in excess of about 60 weight percent, it was necessary to run at very low rates on the order of six to eight inches per minute. It is believed that higher line speeds could be accomplished by increasing the slurry concentration in the bath to about 20 weight percent polymer in the aqueous solution.

EXAMPLE NO. 3

Preparation of PPSS Prepreg

This example further demonstrates the feasibility of impregnating continuous fiber reinforcement with a PPSS resin powder in a manner similar to that described above in Example No. 2. This example was a pilot plant run which produced substantially larger quantities of prepreg material than did Example No. 2.

The PPSS material utilized in this example again did not have any zinc content, but it was generally a higher molecular weight material than that of Example No. 2. The material was provided in a powdered particulate form having an average particular size of 15 to 20 microns with no particles of size above about 50 microns. The material was a mixture of nine laboratory batches of 3 to 5 lbs. per batch. The batches had inherent viscosities ranging from 0.42-0.52 dl/g and melt flow rates from 1.3 to 17.8 g/10 min.

This example extended intermittently over a period of two days. Again a die like that shown in FIGS. 4a and 4b was utilized. Initially, thirteen strands of continuous carbon fiber reinforcement (Hercules AS4-12K, unsized, Hercules, Inc., Aerospace Bacchus Works, Magna, Utah) were used with additional strands being tied in at later times during the process. The basic recipe for the slurry was 5,750 ml of distilled water, 667 g of powdered PPSS, and 6 ml of surfactant.

The weight percent fiber in the finished product varied from 50.0% to 73.0%, and typically was in the range of 60 to 65%. The die temperature was initially started in the range of 317 to 319°C., but was soon raised to the range of 340 to 350°C.; it was observed that at die temperatures of approximately 340°C. the tape quality improved as compared to lower temperatures. The temperature of the drying oven 7 typically was within the range of 520°C. to 565°C. The die was typically taken apart and cleaned with a frequency ranging from one-half hour to two hours. Throughout the run additional slurry solution was added to the bath, various tension adjustments were made to the incoming strand, and linespeed was slightly varied in the manner generally described above to provide for appropriate strand pickup of polymer while avoiding carrying moisture to the heated die.

EXAMPLE NO. 4

Preparation of PPSS Prepreg

This example is substantially similar to Example No. 3 except that there is some variation in the polymer utilized.

The PPSS material utilized in this example again did not have any zinc content. This particular example utilized a blended PPSS polymer. Two batches of polymer had been produced. One being of relatively low molecular weight, and the other being of relatively high molecular weight. The relatively low molecular weight batch had an inherent viscosity of about 0.31 dl/g. The relatively high molecular weight batch had an inherent viscosity of 0.58 dl/g. The two batches were combined and reprecipitated to make two blends. The first blend had an inherent viscosity of 0.41 dl/g, and the second blend had an inherent viscosity of 0.40 dl/g.

The polymer was provided in particulate form having an average particle size in the range of 15 to 20 microns, with no substantial particle content greater than about 50 microns.

The slurry bath prepreg process was conducted in a manner substantially the same as Example No. 3 above, and approximately 45 pounds of high quality, three-inch width prepreg tape was formed and wound into a plurality of rolls for later usage in making laminated structures.

EXAMPLE NO. 5

Preparation of PPSS Prepreg With Preferred Polymer

This example demonstrates the feasibility of impregnating continuous carbon fiber reinforcement with the preferred high molecular weight, highly melt stable PPSS resin.

The PPSS polymer material utilized in this example was the preferred polymer resin produced as described above in Example No. 1 and having a high molecular weight along with a very high melt stability. The melt stability was accomplished with a zinc acetate wash as described in Example No. 1, Part B.

The high molecular weight PPSS material utilized in this example was provided in several batches throughout the PPSS pilot plant production run, and the inherent viscosity of the various batches of preferred material utilized range from 0.42 dl/g to about 0.50 dl/g. The material was provided in the form of a powder having an average particle size in the range of 15 to 20 microns, with no substantial particle content greater than about 50 microns in size.

The prepreg process itself was performed in a manner substantially the same as that described above in Example No. 3. The various operating parameters affecting the pickup of resin particles in the bath by the strands, and the subsequent drying of the strands in the drying chamber 7 were periodically adjusted in a manner like that described above. Resin concentration in the slurry bath was in the range of 7 to 11 percent. Temperatures of the drying chamber 7 ranged from 460 to 585°C. Linespeeds varied from about 45 to about 52 inches per minute.The temperature in the exit region of the heated die 17 varied in a range from about 330 to about 350°C.

The resulting product was a very good three-inch wide prepreg tape which was wound into a plurality of rolls for later use in forming laminating structures.

EXAMPLE NO. 6

Longitudinal Properties Of Laminated Structures

In order to determine the physical properties of fiber reinforced thermoplastic structures constructed from the prepreg materials described above, a number of tests were run in which laminated structures were constructed from the prepreg material and then subjected to physical tests. For the testing of composite longitudinal properties, the laminated structures were formed from eighteen plies of prepreg material with the unidirectional reinforcing materials of all plies being aligned parallel. The prepreg material included approximately 60% by weight of carbon fiber reinforcing. Three different laminated structures were constructed, the first two moldings utilizing material produced as described in Example No. 3 above and the third molding utilizing material as produced in Example No. 4 above.

The mold was constructed with a conventional positive pressure molding technique. The mold conditions during the first molding were 350°C. and 150 psi. The mold conditions during the second and third moldings were 370°C. and 300 psi which is believed to be near optimum conditions. The resulting longitudinal properties of these three tests are shown in the following Table V.

TABLE V

PPSS Composite Longitudinal Properties

| | Tensile (ASTM D3039) | | Flexural (ASTM D790) | | Compressive (ASTM D3410) |
|---|---|---|---|---|---|
| | Strength, ksi | Modulus, msi | Strength, ksi | Modulus, msi | Strength, ksi |
| **First Molding (350°C., 150 psi) (Prepreg From Example No. 2)** | | | | | |
| 75°F. | 172 | 19 | 153 | 15 | 75 |
| 350°F. | 146 | 19 | 119 | 16 | 65 |
| % Retention | 85 | 100 | 78 | 107 | 87 |
| **Second Molding (370°C., 300 psi) (Prepreg From Example No. 2)** | | | | | |
| 75°F. | 201 | 23 | 162 | 17 | 80 |
| 350°F. | -- | -- | 117 | 18 | 79 |
| % Retention | -- | -- | 72 | 105 | 99 |
| **Third Molding (370°C., 300 psi) (Prepreg From Example No. 3)** | | | | | |
| 75°F. | 195 | 17 | 149 | 14 | 78 |
| 350°F. | 173 | 17 | 98 | 14 | 56 |
| % Retention | 89 | 100 | 66 | 100 | 72 |

EXAMPLE NO. 7

PPSS Composite Transverse Properties

Similarly, several eighteen-ply, uni-directional, parallel, laminated structures were subjected to testing to determine the transverse properties of the composite materials; that is, the properties in a direction perpendicular to the direction of the reinforcing strands. Three tests were run as described below in Table VI. The first test structure was constructed with material produced as described in Example No. 3 above. The second and third test structures were constructed with material produced as described in Example No. 4 above. The resulting transverse properties of the PPSS composite materials are shown in the following Table VI.

## TABLE VI

### PPSS Composite Transverse Properties

| Test No. | PPSS Sample From | Mold Type | Tensile (ASTM D3039) Strength, ksi 75°F. | 350°F. | % Ret. | Modulus, msi 75°F. | 350°F. | % Ret. |
|---|---|---|---|---|---|---|---|---|
| 1 | Example No. 2 | Positive Pressure | 2.6 | 2.5 | 97 | 1.1 | 1.2 | 107 |
| 2 | Example No. 3 | Positive Pressure | 2-4 | 2-4 | -- | 0.9-1.2 | 0.8-1.0 | -- |
| 3 | Example No. 3 | Picture Frame | 3.1 | -- | -- | 1.1 | -- | -- |

EXAMPLE NO. 8

PPSS Composite Chemical Resistance

Additionally, a number of composite samples were subjected to various chemical environments to determine the chemical resistance of the PPSS/carbon fiber composite materials. In these examples, the test structures were constructed from twelve plies of the prepreg material prepared as described in Example No. 3 wherein the plies had their reinforcing strands oriented at 90° to the reinforcing strands of adjacent plies. The tests for jet fuel and hydraulic fluid were conducted with the sample immersed in the specified chemical environment at 180°F. The test for NaOH, methylethylketone, and methylene chloride/phenol were conducted with saturated cloth at 75°F. The percentage retention of tensile strength and tensile modulus and of flexural strength and flexural modulus after specified periods of exposure to the particular chemical environment are set forth in the following Table VII.

TABLE VII

PPSS Composite Chemical Resistance

| | Jet Fuel 3 days | Jet Fuel 14 days | Hydraulic Fluid 3 days | Hydraulic Fluid 14 days | 2% NaOH 24 hrs | Methyl Ethyl Ketone 24 hrs | Methylene Chloride/ Phenol 24 hrs |
|---|---|---|---|---|---|---|---|
| Tensile Strength, ksi (ASTM D3039) | | | | | | | |
| - Control | 25 | -- | -- | -- | -- | -- | -- |
| - Exposed | 20 | 22 | 21 | 20 | 24 | 19 | 24 |
| - % Retention | 80 | 88 | 84 | 80 | 96 | 76 | 96 |
| Tensile Modulus, msi (ASTM D3039) | | | | | | | |
| - Control | 1.8 | -- | -- | -- | -- | -- | -- |
| - Exposed | 1.8 | 1.8 | 1.9 | 2.1 | 1.9 | 1.8 | 1.9 |
| - % Retention | 100 | 100 | 106 | 117 | 106 | 100 | 106 |
| Flexural Strength, ksi (ASTM D790) | | | | | | | |
| - Control | 53 | -- | -- | -- | -- | -- | -- |
| - Exposed | 47 | 32 | 48 | 33 | 45 | 48 | 36 |
| - % Retention | 89 | 60 | 90 | 62 | 85 | 90 | 68 |
| Flexural Modulus, msi (ASTM D790) | | | | | | | |
| - Control | 1.7 | -- | -- | -- | -- | -- | -- |
| - Exposed | 1.7 | 1.8 | 1.8 | 1.7 | 1.6 | 1.6 | 1.4 |
| - % Retention | 100 | 106 | 106 | 100 | 94 | 94 | 82 |

EXAMPLE NO. 9

Properties of Laminated Structures from Preferred Materials

The laminated structures utilized in this example were constructed from the preferred prepreg material produced as described above in Example No. 5.

All of the properties discussed below were determined from 20-ply uni-directional laminates, except for the longitudinal tensile properties which were determined from 4-ply uni-directional laminates. All laminates were formed with conventional positive pressure molding techniques.

Many combinations of mold conditions (temperature and pressure) were used to try to determine optimum mold conditions. Temperatures ranged from 550 to 700°F. Pressures ranges from 450 to 750 psi. No optimum combination was apparent; all combinations within those ranges appear satisfactory except that at 700°F. pressures above about 450 psi resulted in flowing of sample around the edges of the mold. The data for physical properties set forth in Table VIII below is stated in ranges observed from ten different test conditions, namely 550°F./450 psi, 550/600, 550/750, 600/450, 600/600, 600/750, 650,/450, 650/600, 650/750, and 700/450, with the highest and lowest values observed having been excluded.

TABLE VIII

Preferred PPSS Composite Mechanical Properties

| | Modules (MSI) | Strength (KSI) | Elongation (%) | Maximum Deflection (inch) | Fiber Strain (%) |
|---|---|---|---|---|---|
| Longitudinal Tensile Properties (ASTM D3039) | 19.78-20.71 | 198.53-237.87 | 0.93-1.08 | - | - |
| Transverse Tensile Properties (ASTM D3039) | 1.38-1.46 | 4.18-4.70 | 0.33-0.37 | - | - |
| Longitudinal Compressive Properties (ASTM D3410) | - | 69.04-86.06 | - | - | - |
| Longitudinal Flexural Properties (ASTM D790) | 15.08-15.70 | 128.88-160.58 | - | .193-.230 | .009-.010 |

Conclusion

As is seen from the above examples, by the methods of the present invention a fiber reinforced composite thermoplastic material having a PPSS matrix can be formed by utilizing a PPSS resin in connection with a modified slurry pultrusion process. This prepreg can be utilized to form laminated composite structures having very desirable mechanical properties plus a very high resistance to damaging chemical environments. These materials can be successfully utilized at continuous temperatures of 350°F.

Thus it is seen that the processes and products of the present invention readily achieve the ends and advantages mentioned as well as those inherent therein. While certain preferred embodiments of the invention have been disclosed and described for the purposes of the present disclosure, numerous changes in the process and products may be made by those skilled in the art which changes are encompassed within the scope and spirit of the present invention as defined by the appended claims.

**Claims**

1. A process for producing a prepreg, said process comprising the steps of:

(a) providing a supply of polyarylene sulfide sulfone resin in the form of particles suspended in a slurry liquid to form a slurry, said resin having a softening temperature;

(b) providing a supply of a fiber reinforcement in continuous form;

(c) impregnating the fiber reinforcement with said particles by passing the said fiber reinforcement through the slurry to form a resin-impregnated reinforcement;

(d) drying the resin-impregnated reinforcement by heating the resin-impregnated reinforcement sufficiently to substantially completely evaporate the slurry liquid, thereby minimizing resin buildup on a die used in step (e); and

(e) forcing the resin-impregnated reinforcement through a heated die to heat the resin particles of the resin-impregnated reinforcement to at least said softening temperature of said resin and to consolidate the resin and the fiber reinforcement to form a fiber-reinforced prepreg with a continuous thermoplastic matrix.

2. The process of claim 1, wherein one or more of the following specific steps (a) through (o) is employed:

(a) step (d) is further characterized as maintaining a temperature of said resin-impregnated reinforcement below said softening temperature while evaporating said slurry liquid, to thereby avoid any substantial softening of the resin particles of the resin-impregnated reinforcement during said drying step;

(b) step (a) is further characterized in that said polyarylene sulfide sulfone resin is a high molecular weight melt stable resin having an inherent viscosity greater than 0.40 dl/g and a melt flow rate of less than about 24 g/10 min;

(c) step (a) is further characterized in that said polyarylene sulfide sulfone resin has a melt flow rate of less than about 15 g/10 min;

(d) step (a) is further characterized in that said polyarylene sulfide sulfone resin comprises polyphenylene sulfide sulfone;

(e) step (a) is further characterized in that said polyarylene sulfide sulfone resin is a highly melt stable resin capable of being melt processed in at least two stepwise operations with a substantial retention of physical properties;

(f) step (a) is further characterized in that said slurry is aqueous and contains an effective amount of a wetting agent;

(g) step (a) is further characterized in that said resin particles have an average diameter of less than about 20 microns;

(h) step (e) is further characterized in that the resin-impregnated reinforcement is heated to a temperature in the range of about 325°C. to about 355°C. as it passes through said heated die;

(i) step (e) is further characterized in that said heated die is an elongated die in which an entrance cross section is larger than an exit cross section, with the temperature in an exit region of said die being in said range of about 325°C. to about 355°C.;

(j) step (c) is further characterized in that said resin-impregnated reinforcement contains from about 25 to about 50 weight percent of said polyarylene sulfide sulfone resin;

(k) step (b) is further characterized in that said fiber reinforcement comprises carbon fiber reinforcement; and
step (c) is further characterized in that said resin-impregnated reinforcement contains about 40 weight percent of said polyarylene sulfide sulfone resin and about 60 weight percent of said carbon fiber reinforcement;

(l) step (b) is further characterized in that said fiber reinforcement comprises glass fiber reinforcement; and
step (c) is further characterized in that said resin-impregnated reinforcement contains about 30 weight percent of said polyarylene sulfide sulfone resin and about 70 weight percent of said glass fiber reinforcement;

(m) step (c) is further characterized in that said resin impregnated reinforcement contains from about 25 to about 50 weight percent of said fiber reinforcement; and
said process further includes a step, after step (e), of severing said fiber reinforced prepreg into relatively short lengths suitable for use as an injection molding feedstock;

(n) step (c) is further characterized in that said resin impregnated reinforcement contains from about 35 to about 45 weight percent of said fiber reinforcement; and/or

(o) step (a) is further characterized in that said polyarylene sulfide sulfone resin is a high molecular weight melt stable resin.

3. A process for producing a prepreg, said process comprising the steps of:

(a) providing a supply of polyphenylene sulfide sulfone resin in the form of particles suspended in a slurry liquid to form a slurry, said resin being characterized as:
(1) having an inherent viscosity greater than about 0.40 dl/g;
(2) having a melt flow rate of less than about 24 g/10 min;
(3) being highly melt stable and capable of being melt processed in at least two stepwise operations with a substantial retention of physical properties; and
(4) having an average particle size of less than about 20 microns;

(b) providing a supply of fiber reinforcement in continuous form;

(c) impregnating the fiber reinforcement with said particles by passing said fiber reinforcement through the slurry to form a resin-impregnated reinforcement containing from about 25 to about 50 weight percent of said polyphenylene sulfide sulfone resin;

(d) drying the resin-impregnated reinforcement by heating the resin-impregnated reinforcement sufficiently to evaporate the slurry liquid; and

(e) forcing the resin-impregnated reinforcement through an elongated heated die to heat the resin particles of the resin-impregnated reinforcement sufficiently to soften the resin particles and to consolidate the resin and the fiber reinforcement to form a fiber-reinforced prepreg with a continuous polyphenylene sulfide sulfone matrix, said die having an entrance cross section greater than an exit cross section thereof, and said die having a temperature in an exit region thereof in a range of about 325°C. to about 355°C.

4. The process of claim 3, further characterized by one or more of the following features:

(a) step (d) is further characterized as heating the resin-impregnated reinforcement sufficiently to substantially completely evaporate the slurry liquid, thereby minimizing resin buildup on the die in step (e), while maintaining a temperature of said resin-impregnated reinforcement sufficiently low to avoid any substantial softening of the resin particles of the resin-impregnated reinforcement during said drying step;

(b) step (a) is further characterized in that said polyphenylene sulfide sulfone resin has a melt flow rate of less than about 15 g/10 min;

(c) step (b) is further characterized in that said fiber reinforcement comprises carbon fiber reinforcement; and

step (c) is further characterized in that said resin-impregnated reinforcement contains about 60 weight percent of said carbon fiber reinforcement;

(d) step (b) is further characterized in that said resin-impregnated reinforcement contains about 70 weight percent of said glass fiber reinforcement; and/or

(e) step (a) is further characterized in that said slurry liquid is an aqueous slurry liquid containing an effective amount of a wetting agent.

5. The method of claim 4, further comprising the step of:

periodically interrupting said process to clean said die and remove any buildup of polyphenylene sulfide sulfone resin thereon.

6. A prepreg comprising an uni-directional fiber reinforcement embedded in a continuous matrix of high molecular weight highly melt stable polyarylene sulfide sulfone resin capable of being melt processed in at least two stepwise operations with a substantial retention of physical properties.

7. The prepreg of claim 6, wherein said polyarylene sulfide sulfone resin comprises polyphenylene sulfide sulfone having an inherent viscosity greater than 0.40 dl/g and a melt flow rate of less than about 24 g/10 min; in particular wherein:

said polyphenylene sulfide sulfone resin has a melt flow rate of less than about 15 g/10 min.

8. The prepreg of claim 6 or 7, wherein:

said prepreg contains in the range of about 25 to about 50 weight percent of said polyarylene sulfide sulfone resin; in particular wherein:

(a) said fiber reinforcement comprises carbon fiber reinforcement and said prepreg contains about 40 weight percent of said polyarylene sulfide sulfone resin; or

(b) said fiber reinforcement comprises glass fiber reinforcement and said prepreg contains about 30 weight percent of said polyarylene sulfide sulfone resin.

9. A laminated article formed from the fiber reinforced prepreg of one of claims 6 to 8.

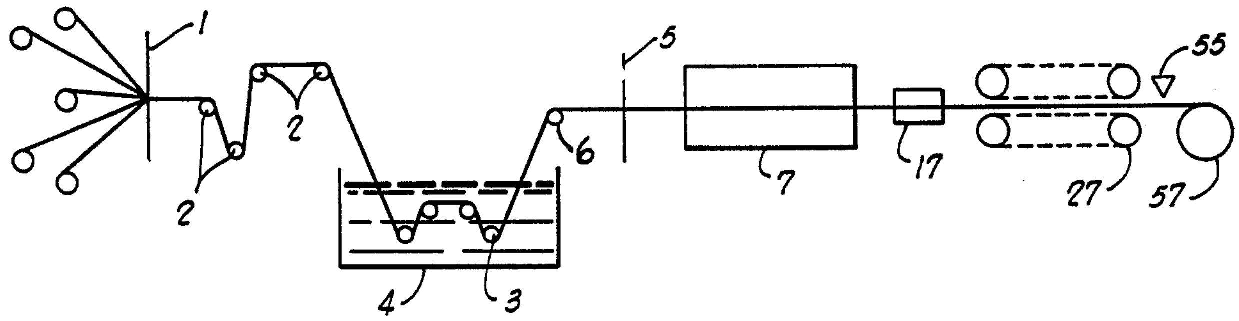


FIG. 1

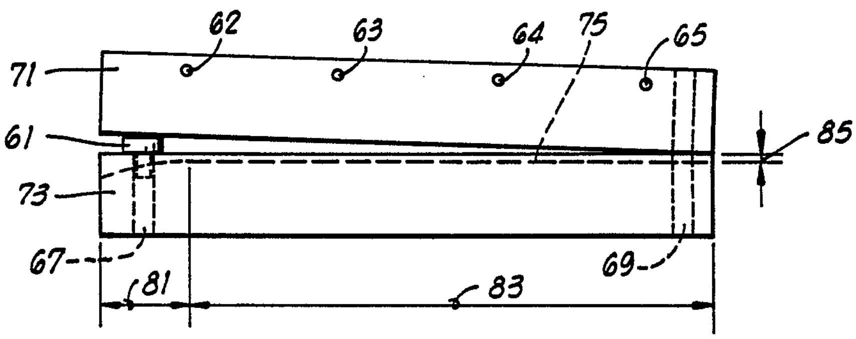


FIG. 4A

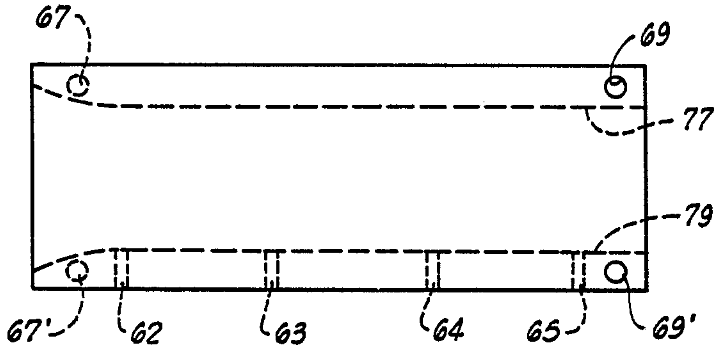


FIG. 4B

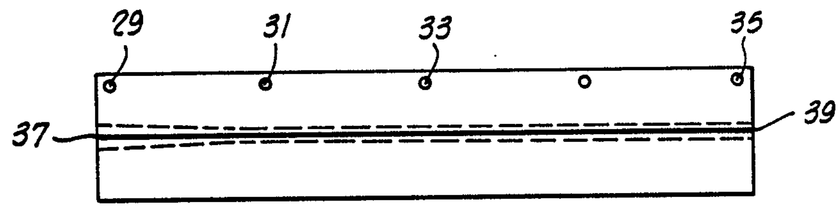


FIG. 2A

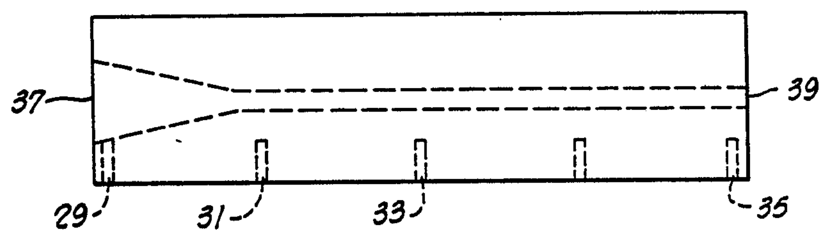


FIG. 2B

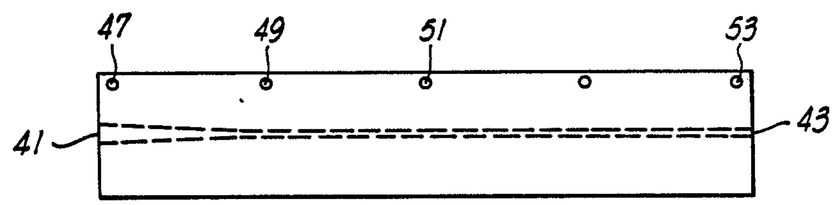


FIG. 3A

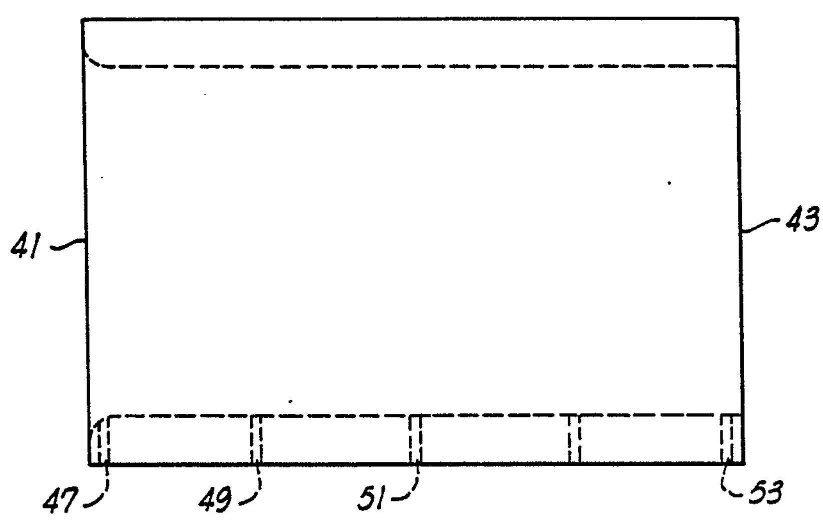


FIG. 3B